# EUROPEAN PATENT SPECIFICATION

(11) **EP 4 370 314 B1**
(45) Date of publication and mention of the grant of the patent: **25.03.2026**
(21) Application number: 22841332.4
(22) Date of filing: 12.07.2022
(51) Int. Cl.: B29C 35/02, B29C 70/48, B29D 99/00, B29C 70/34, B29C 70/44, B29C 70/54, B29L 31/08, F03D 1/06, G05D 22/02

(54) **A METHOD OF MANUFACTURING A COMPOSITE STRUCTURE, A WIND TURBINE WITH THE COMPOSITE STRUCTURE AND A MANUFACTURING SYSTEM THEREOF**
VERFAHREN ZUR HERSTELLUNG EINER VERBUNDSTRUKTUR, WINDTURBINE MIT DER VERBUNDSTRUKTUR UND HERSTELLUNGSSYSTEM DAFÜR
PROCÉDÉ DE FABRICATION D'UNE STRUCTURE COMPOSITE, ÉOLIENNE DOTÉE DE LA STRUCTURE COMPOSITE ET SYSTÈME DE FABRICATION DE CETTE DERNIÈRE

(30) Priority: 16.07.2021 DK PA202170383
(43) Date of publication of application: 22.05.2024
(73) Proprietor: Envision Energy Technology Pte Ltd., 079903 Singapore (SG)
(72) Inventor: GIANCARLO, Girolomini, 47853 Coriano (IT); JENS, Glud, 7190 Billund (DK); LARS, Overgaard, 9000 Aalborg (DK); SONG, Silong, Shagnhai 201799 (CN); MANJURAJ, Vasantha, 6833GG Arnhem (NL)
(74) Representative: Balder IP Law, S.L.
(86) International application number: PCT/CN2022/105019
(87) International publication number: WO 2023/284696

(56) References cited:
- EP-A1- 3 763 514
- EP-A1- 3 766 676
- WO-A1-2020/069982
- WO-A1-2020/069982
- CN-A- 103 252 897
- CN-A- 110 884 167
- CN-A- 111 941 877
- CN-A- 112 046 035
- CN-A- 112 238 628

## Description

### Field of the Invention

The present invention relates to a method and system of manufacturing composite structures using vacuum infusion, where the stack of layers is infused with a polyurethane matrix material and then cured to form the composite structure.

The present invention also relates to a composite structure manufactured using such method. The present invention also relates to a wind turbine comprising the composite structure.

### Background of the Invention

It is known that wind energy production has rapidly increased over the last decades and generally recognised as a clean and economic renewable energy source. To meet the demand for increased energy production, wind turbines are getting larger and larger. This increases the weight and costs of the components thereof, particularly the size and weight of the wind turbine blades has increased. This increases the need for solutions that saves materials and reduces the total weight of the wind turbine blades.

Vacuum assisted resin transfer moulding (VARTM) processes are commonly used during the manufacture of large composite structures, such as wind turbine blades, spar caps and other components. Typically, the stack of layers is infused with epoxy resin. Flow meshes and flow channels are normally arranged on top of the stack for controlling the distribution of the epoxy resin along the stack. Flow enhancing layers may also be used to control the resin flow through the stack. Large infusion channels are needed to ensure a proper infusion speed due to the high viscosity of the epoxy resin. The amount of waste resin material is relatively large, which leads to increased costs and increased environmental issues.

EP 3763514 A1 and EP 3738755 A1 both disclose a method of manufacturing a composite structure using a vacuum infusion process, where the stack of layers is infused with a polyurethane resin. Once the lay-up process is complete, the stack of layers is enclosed in a first bag film. Vacuum is then applied to the enclosed stack. A second bag film is afterwards arranged on the first bag film and sealed along the edges. Hot air is blown into the spacing between the first and second bag films while heat is applied to the mould to remove moisture from the stacked materials. Once the dehumidification is complete, the polyurethane resin is introduced into the stack and the infused stack is finally set to cure. The cooling time prior to infusion takes time as the stack has a large mass with a low thermal inertia.

EP 3738755 A1 further discloses that the mould was initially heated to a high temperature of 45°C and then gradually lowered to 20°C, while vacuum was applied to the stack at 20mbar. It is stated that this dehumidification step eliminates the need for cooling the heated stack prior to infusion. This requires a precise control of the temperature during heating and increases the complexity of the manufacturing process.

WO 2021/102767 A1 discloses a core material with grooves formed on top and bottom surfaces of the core element, where the grooves are adapted to enhance the distribution of resin during infusion. This prior art is silent about the details of manufacturing the wind turbine blade.

CN 110884167 A1 discloses a manufacturing system where a vacuum line with a first valve is arranged at one side of the mould and where a resin injection line and a dehumidification line are connected to a second valve arranged on the opposite side of the mould. Initially, the second valve is closed and a vacuum pressure is established. Then, the first valve is closed and the humidification line is open to dehumidify the stacked structure. No further details of the dehumidification process are provided.

EP3766676A1 discloses a method for preparing a polyurethane composite by a vacuum infusion process, a polyurethane composite obtained by the method and use thereof. The method of the present invention for preparing a polyurethane composite by a vacuum infusion process makes is possible to determine the time for infusing polyurethane compositions after completing the dehumidification easily and intuitively, thereby improving production efficiency and saving production costs.

### Object of the Invention

One object of the present invention is to provide a method, and a system that overcomes the abovementioned problems of the prior art, or at least provides an alternative solution.

One object of the present invention is to provide a method, a system and a composite structure that allows for an improved production efficiency and reduced environmental impact.

One object of the present invention is to provide a method, a system and a composite structure that has improved structural properties and lower manufacturing costs.

One object of the present invention is to provide a method, a system and a composite structure that allows for an improved drying and/or cooling process.

### Description of the Invention

One object of the invention is achieved by a method of manufacturing a composite structure, such as a wind turbine blade component, according to claim 1, comprising:
- arranging a stack of layers on a moulding surface of a mould, wherein the stack comprises at least one layer of a fibre reinforced material and at least one core element of a core material,
- further arranging a resin distribution system on a top surface of the stack of layers,
- covering the stack of layers and the resin distribution system with at least one vacuum bag,
- evacuating air from the stack of layers using a vacuum source,
- heating the stack of layers under vacuum,
- infusing the stack of layers with a resin matrix material, the resin matrix material being a polyurethane material, and
- curing the infused stack of layers to form the composite structure,

wherein the step of heating the stack of layers under vacuum comprises:
   1) applying a first vacuum pressure for a first time period,
   2) applying a second vacuum pressure for a second time period, where the first vacuum pressure is lower than the second vacuum pressure,
   3) alternating between sub-steps 1) and 2), and
   4) monitoring an air moisture content in the vacuum system for a third time period,
wherein dried air, e.g. cold or warm air, is introduced into the vacuum system using an airdrying unit during sub-step 2), while no dried air is introduced into the vacuum system during sub-step 1).

This provides an alternative method of manufacturing a composite structure with increased structural strength and fatigue resistance compared with conventional composite structures infused with epoxy resin. This method also reduces manufacturing costs, environmental impact, and amount of waste material. The use of polyurethane resin allows for fast infusion and curing, thereby increasing the production efficiency.

The present dehumidification process utilises cyclic vacuum to dry the stacked materials as well as the resin infusion system. The present invention also allows the resin infusion system to be used to remove water vapours from the heated stack of layers. This reduces the number of total components needed to conduct the dehumidification process. This further simplifies the preparation process as no extra input or output channels need to be arranged on the stack of layers.

No need for gradually lowering the heating temperature as in EP 3738755 A1 during dehumidification. Also, no need for blowing in hot air between two vacuum bags as in EP 3763514 A1 while heating the stack of layers.

During layup, at least one layer of fibre reinforced material, a flow enhancing layer, a peel ply layer, a mould release agent, and/or gel coat are initially arranged on the moulding surface of the mould to form the outer skin. The core elements are then arranged on top of these layers along with spar cap elements, root inserts and/or other reinforcements. At least one further layer of fibre reinforced material is subsequently arranged on top of these layers. Alternatively, a dry layup of the layers forming the spar cap may be performed after layup of the further layer of fibre reinforced material. The individual layers form a stack, e.g. having a sandwich structure. Other layup arrangements may also be used.

After completing the lay-up, a resin distribution system is arranged on top of the stack of layers. The resin distribution system may comprise a peel ply layer, a flow mesh layer, resin inlet channels, vacuum outlet channels and/or at least one vacuum bag film.

Air is then evacuated from the stack of layers and a vacuum pressure is established using a vacuum source. Any vacuum leak in the vacuum system may be detected and repaired before starting the dehumidification process.

The drying process can then be started by heating under vacuum. This may be achieved by turning on heating elements arranged in or on the mould and/or heating blankets arranged at the top surface of the stack of layers and the vacuum bag. Insulating blankets may be used instead of heating blankets. Heat may thus be applied to the top surface and/or bottom surface of the stack of layers.

After dehumidification, the polyurethane resin is introduced into this dried stack of layers under vacuum from a resin injection machine. The polyurethane resin is distributed along the stack of layers via the resin distribution system. Excess polyurethane resin exits through outlet channels, e.g. the vacuum outlet channels.

Once the resin injection process is complete, the infused stack of layers is then set to cure. The heating may be turned on again during this curing process.

According to one embodiment, the heating is stopped, and the stack of layers is cooled, passively or actively, down to at least one infusion temperature prior to said infusing the stack of layers, the at least one infusion temperature being dependent on a selected location on the composite structure.

The heated stack of layers may after the drying process be cooled down to at least one infusion temperature before starting the infusion process. Preferably, one or more infusion temperatures may be used as local thresholds in the controller for locally controlling the cooling of the entire stack of layers. Each reference temperature may depend on a selected location on moulding surface, and in turn on the composite structure, in a longitudinal direction and/or in a transverse direction. This may be achieved by passive cooling where heat is able to dissipate from the heated stack as well as the mould and into the surroundings. This reduces the amount of cooling energy needed, however, it may increase cooling time. This may also be achieved by active cooling, as mentioned later.

By cooling the heated stack of layers to a desired infusion temperature, the polyurethane resin may be introduced at optimal conditions to ensure a proper infusion. Optionally, the polyurethane resin may be pre-heated before being introduced into the stack of layers. The prior art EP 3763514 A1 does not hint or suggest that a cooling process is performed before the resin is introduced.

According to one embodiment, cold, dried air is introduced into the vacuum system using the air drying unit.

The cooling process may also be achieved by active cooling where one or more cooling devices, e.g. fans or heat exchangers, are used to cool down the heated stack. Hot air surrounding the heated stack of layers may be sucked into the cooling devices, which extract heat from the air. The cooled down air may be blown back along the heated stack of layers. Alternatively, a cooling medium may be guided along the heated stack of layers. This reduces the cooling time, however, it may increase the power consumption.

In one example, dried air may be introduced into the stack of layers via at least one air drying unit coupled to the vacuum lines. The air drying unit may draw in air from the surroundings and remove moisture from the inputted air before outputting it as dry air. The air drying unit may further remove heat from the passing air, thereby outputting cold, dried air. Here, the term 'cold air' is understood as air having a temperature that is lower than a material temperature of the stack of layers.

In an alternative configuration, not part of the claimed invention, the vacuum pressure of the heated stack of layers may be maintained at a relatively constant vacuum pressure during the drying process. Water vapours may then be removed from the heated stack of layers via the vacuum lines and/or the resin feed lines, depending on the connection of the vacuum source. This allows for a relatively long drying time.

In the claimed invention, dried air may be introduced into the stack of layers during the dehumidification. The vacuum pressure may advantageously be established by a vacuum source coupled to the resin feed lines. Evaporated moisture may then mix with the dry air before being led out of the stack of layers via the resin distribution system and the resin feed lines thereof. Thereby reversing the flow direction through the feed lines. This enhances the drying process and reduces the drying time.

The dry air may be heated in the air drying unit to a temperature above the material temperature. Heat may thus be transferred from the passing warm air to the stack of layers. Alternatively, the dry air may be cooled in the air drying unit to a temperature below the material temperature. Heat may thus be transferred from the stack of layers to the passing cold air.

During the first sub-step, a valve element for the air drying unit may be closed off so no dry air may be introduced into the stack of layers. The vacuum pressure may be maintained at a first vacuum pressure during the first time period. The first vacuum pressure may be selected between 0-30mbar. The first time period may be selected between 1-60 minutes. This allows moisture to evaporate from the materials and into the dry air.

During the second sub-step, the valve element for the air drying unit may be open so dry air may be introduced into the stack of layers. The vacuum pressure may be maintained at a second vacuum pressure during the second time period. The first vacuum pressure differs from the second vacuum pressure. The second vacuum pressure may be selected between 50-200mbar. The second time period may be selected between 1-60 minutes. This allows the moist air to exit through resin feed lines and fresh dry air to enter the stack of layers.

According to one embodiment, the measured air moisture content is compared to a reference air moisture content, where the heating is stopped if the measured air moisture content crosses the reference air moisture content.

The air moisture content in the vacuum system is monitored for a third time period, where the measured air moisture content is representative of the relative moisture content in the stack of layers. Preferably, the air moisture content may be determined by a dew point measurement. However, the air moisture content may also be determined using other measurement techniques, such as humidity indicator cards on the stack of layers. The third time period may be selected between 1-60 minutes. This allows the air moisture content to reach a steady state.

The measurement of the air moisture content may be performed after or during the alternating between the first and second sub-steps.

The measured air moisture content may be compared with a predetermined reference air moisture content. If the measured air moisture content drops below the reference air moisture content, then the heating is terminated. Any insulating or heating blankets may then be removed. If the measured air moisture content is above the reference air moisture content, then the heating is continued. The reference air moisture content may be selected based on the layup design, resin properties, ambient conditions, etc.

According to one embodiment, the method further comprises measuring at least one temperature relative to the stack of layers.

A material temperature of the stack of layers may also be measured using a temperature sensor. The material temperature may also be compared with a reference temperature. The temperature difference may be used to control the heating of the stack of layers, e.g. by regulating the mould heating and/or the blanket heating.

According to one embodiment, said at least one temperature is measured at a top surface of or internally within the stack of layers.

Preferably, the material temperature may be measured at the top surface of the stack of layers using an infrared temperature sensor, a thermocouple or another type of sensor. Alternatively, the material temperature may be measured internally in the stack of layers using an embedded temperature sensor or another type of sensor. The measured material temperature may be transmitted to a controller controlling the mould heating and/or the blanket heating.

According to one embodiment, the mould and/or heating blankets arranged on top of the at least one vacuum bag is/are maintained at at least one reference temperature during said heating, the at least one reference temperature being dependent on a selected location on the composite structure.

The heating may be controlled so that the entire stack of layers is maintained at a relatively constant material temperature during heating. Preferably, one or more reference temperatures may be used as local setpoints in the controller for locally regulating the heating of the mould and/or of the heating blankets during the dehumidification. Each reference temperature may depend on the selected location on the moulding surface, and in turn on the composite structure, in the longitudinal direction and/or in the transverse direction. This allows for a simple temperature control, whereas EP 3738755 A1 requires a more complex temperature control.

According to one embodiment, said heating is performed for at least one fourth time period, the at least one fourth period being dependent on a selected location on the composite structure.

Further, the heating of the entire stack of layers may be conducted for a fourth time period, which allows the stack of layers to dry and thus allows for a proper polyurethane infusion. Preferably, individual fourth time periods may be pre-selected for each location on the moulding surface, and in turn on the composite structure, in the longitudinal direction and/or in the transverse direction. This further allows the controller to locally regulate the heating of the mould and/or of the heating blankets during the dehumidification. The fourth time period (s) may be selected between 0-4 hours, e.g. between 2-3 hours.

The local thickness of the stack of layers and/or the stack configuration may vary along the longitudinal direction and/or the transverse direction. Thus, a longer heating time and/or a higher heating temperature may be selected for some locations, e.g. at a root end. Similarly, a shorter heating time and/or a lower heating temperature may be selected for other locations, e.g. at a tip end. The same may apply for the infusion temperature; polyurethane resin may be introduced at a higher infusion temperature at some locations while polyurethane resin may be introduced at a lower infusion temperature at other locations. This ensures that the entire stack of layers is sufficiently dry before introducing the polyurethane resin.

According to one embodiment, sub-steps 1) and 2) are each repeated at least a predetermined number of times during said altering in sub-step 3).

Each of the first and second sub-steps may be repeated at least two times, preferably at least four times, for each run. Preferably, the first and second sub-steps may each be repeated a first number of times during the first run and then repeated a second number of times for any subsequent runs. The first number may differ from the second number, or the first and second numbers may be the same. This enables moisture within the evacuated materials to evaporate and be led away via the dry air introduced into the stack of layers.

One object of the invention is also achieved by a composite structure, not being part of the claimed subject matter, comprising a stack with at least one layer of a fibre reinforced material and at least one core element of a core material, where the stack has a top surface and a bottom surface, characterised in that the composite structure is manufactured as defined above.

Composite structures can thus be produced using the abovementioned manufacturing method. The present manufacturing method reduces the risk of dry spots in the laminate and reduces the need for surface repairs after curing.

According to one embodiment, said composite structure comprises core elements with grooves adapted for resin distribution.

The composite structure may advantageously be manufactured using core elements with grooves adapted for resin distribution. Preferably, the core elements may have the same groove design in the top and bottom sides as described in WO 2021/102767 A1. The core elements may be made of a synthetic foam material but could also be made of another core material with low water absorption properties. This further reduces the amount of moisture in the stack of layers.

One object of the present invention is further achieved by a wind turbine not being part of the claimed subject matter, comprising a wind turbine tower, a nacelle arranged on top of the wind turbine tower and a rotor with at least one wind turbine blade rotatably arranged relative to the nacelle, characterised in that the wind turbine comprises at least one composite structure as defined above.

The composite structure may advantageously be a wind turbine component. Preferably, the composite structure may be a spar cap element, a shear web element, a blade shell, or another type of wind turbine component.

One object of the present invention is achieved by a system, according to claim 10 of manufacturing a composite structure by the method of any one of claims 1 to 9, such as a wind turbine blade component, comprising:
- a mould having a moulding surface adapted to receive a stack of layers, the stack comprises at least one layer of a fibre reinforced material and at least one core element of a core material,
- a first vacuum source connected to at least one vacuum line, which is intended to be connected to vacuum outlet channels on the stack of layers,
- a resin injection machine connected to a first valve element in at least one resin feed line, the resin injection machine being configured to supply a polyurethane resin to the stack of layers,
- wherein a second vacuum source is further connected to the first valve element and configured to perform the sub-steps 1) to 3),
- an air moisture content sensor arranged in the vacuum system, e.g. between the first valve element and the second vacuum source, and
- at least one air drying unit is connected to a second valve element arranged at the at least one vacuum line, the at least one air drying unit being configured to introduce dried air into the stack of layers in the sub-step 2) and not introduce dried air into the stack of layers in the sub-step 1), and
- a controller configured to control the operations of the air drying unit, the second vacuum source and the air moisture content sensor.

This provides a manufacturing system capable of increasing production efficiency and reducing the amount of waste material. The present manufacturing system reduces manufacturing costs and reduces the environmental impacts. The present manufacturing system allows the resin feed line to be used to also lead water vapours away from the heated stack of layers.

The mould has a moulding surface and at least one heating element arranged on or in the mould. The heating elements are connected to a controller configured to control the operation of the heating elements. The controller may optionally be connected to a temperature sensor arranged relative to the stack of layers. This allows the stack of layers to be heated from the bottom surface.

Optionally, one or more insulating or heating blankets may be arranged on the top surface of the stack of layers. The heating blankets may also be connected to the controller, which further may control the operation of the heating blankets. This allows the stack of layers to be heated from the top surface.

A first vacuum source is connected to at least one vacuum line, which is further connected to vacuum out channels on the stack of layers. A pressure regulator and/or a pressure sensor may be arranged at the vacuum line for regulating the vacuum pressure. A resin injection machine is connected to a first valve element arranged in at least one resin feed line, which is further connected to a resin distribution system on the stack of layers. This first vacuum source and resin injection machine are used during the infusion process to introduce the polyurethane resin into the stack of layers.

The first valve element is further connected to a second vacuum source and an air moisture content sensor. The air moisture content sensor may be a dew point sensor. A second valve element is arranged at the vacuum line. A pressure regulator may be arranged between the first valve element and the second vacuum source for regulating the vacuum pressure. This second vacuum source is used during the drying process to remove moisture from the stacked materials.

Preferably, at least one air drying unit may be connected to the second valve element for introducing dried air into the stack of layers. The air drying unit may have an air inlet for enabling air to enter the air drying unit, and moisture may be removed from the air before outputting it as dry air. The air may be heated or cooled when passing through the air drying unit. A pressure regulator may be arranged between the second valve element and the air drying unit for regulating the air pressure.

The air drying unit may be operated together with the second vacuum source during the drying process and/or the cooling process to enhance the drying and/or cooling process.

According to one embodiment, at least the air drying unit, the second vacuum source and the air moisture content sensor are implemented in one compact unit, the one compact unit further comprising a controller configured to control the operation of the one compact unit.

The air drying unit, the second vacuum source and the air moisture content sensor may be separate units, which are interconnected. Alternatively, the air drying unit, the second vacuum source and the air moisture content sensor are integrated into one compact unit. Optionally, the first valve element and/or the second valve element may further be implemented in this compact unit.

### Description of the Drawings

The invention is described by example only and with reference to the drawings, wherein:
Fig. 1 shows a prior art arrangement of a manufacturing system for vacuum infusion with epoxy resin,
Fig. 2 shows a first embodiment of a manufacturing system according to the invention,
Fig. 3 shows a second embodiment of the manufacturing system,
Fig. 4 shows a third embodiment of the manufacturing system,
Fig. 5 shows an exemplary graph of the air moisture content and the vacuum pressure as function of time, and
Fig. 6 shows the flow of dry air through the resin distribution system.

In the following text, the figures will be described one by one, and the different parts and positions seen in the figures will be numbered with the same numbers in the different figures. Not all parts and positions indicated in a specific figure will necessarily be discussed together with that figure.

### Detailed Description of the Invention

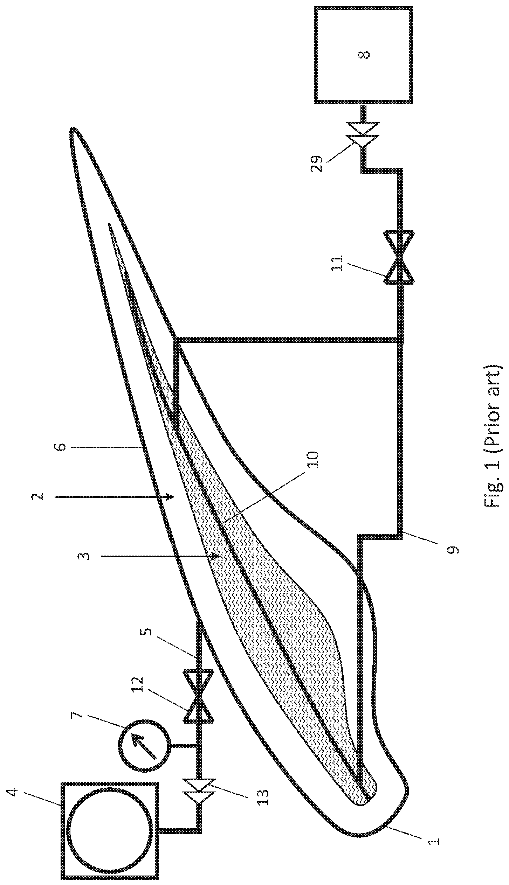

Fig. 1 shows a prior art arrangement of a manufacturing system for vacuum infusion with epoxy resin. The manufacturing system comprises a mould 1 having a moulding surface on which a stack 2 of at least one fibre reinforced layer and at least one core element is arranged. A resin distribution system 3 is further arranged on top of the stack of layers 2. Here, only the flow mesh of the resin distribution system is illustrated.

A first vacuum source 4, e.g. a vacuum pump. is connected to at least one vacuum line 5, which is further connected to vacuum outlet channels 6 on the stack of layers 2. A pressure sensor 7 is arranged at the vacuum line 5 for measuring the vacuum pressure.

A resin injection machine 8 is connected to at least one resin feed line 9, which is further connected to resin inlet channels 10 on the stack of layers 2. Valve elements 11, 12 are arranged the resin injection line and the vacuum lines, respectively.

The stack of layers 2 are evacuated (indicated by double arrows 13) and a vacuum pressure is established. Then, the valve element 11 is open and epoxy resin is introduced (indicated by double arrows 29) from the resin injection machine 8 and into the stack of layers 2.

Once the stack of layers 2 is fully saturated with epoxy resin, the valve element 11 is closed off and the infused stack is set to cure. After curing, the composite structure is lifted out of the mould 1.

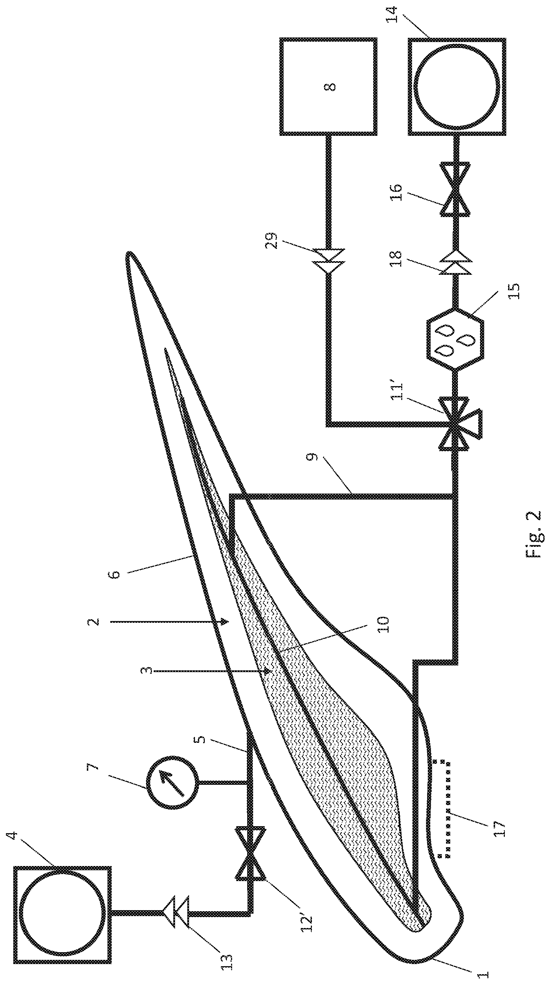

Fig. 2 shows a first embodiment of a manufacturing system according to the invention, where the stack of layers 2 is infused with a polyurethane resin instead of epoxy resin.

After the layup of the stack of layers 2 is complete, the resin distribution system 3 is arranged on top of the stack of layers 2. The vacuum lines 5 are connected to a second valve element 12' and further to the first vacuum source 4.

The resin infusion machine 8 is connected to the resin feed lines 9 and further to a first valve element 11'. The resin feed lines 9 are also connected to the resin inlet channels 10 on the stack of layers 2.

A second vacuum source 14 is connected to the first valve element 11' via another line. An air moisture content sensor 15 is arranged between the first valve element 11' and the second vacuum source 14. A pressure regulator 16 is arranged at the vacuum line 5 and this other line.

Vacuum is initially established (indicated by double arrows 18) using the second vacuum source 14, where the first valve element 11' is open and the second valve element 12' is closed off. The drying process is then started by activating the heating element 17 on or in the mould 1. The air moisture content sensor 15 is used to monitor the relative air moisture content in the vacuum system.

The vacuum pressure is alternated between a first vacuum pressure and a second vacuum pressure for removing moisture from the stacked materials. The drying process is afterwards terminated by turning off the heating elements 17. The first valve element 11' is then switched to the line of the resin injection machine 8. The second valve element 12' is opened.

The polyurethane resin is then introduced (indicated by double arrows 29) into the stack of layers 2 from the resin infusion machine 8. Once the stack of layers 2 is fully saturated with polyurethane resin, the valve element 11' is closed off and the infused stack is set to cure.

During the curing process, the heating elements 17 is turned on again to enhance the curing process.

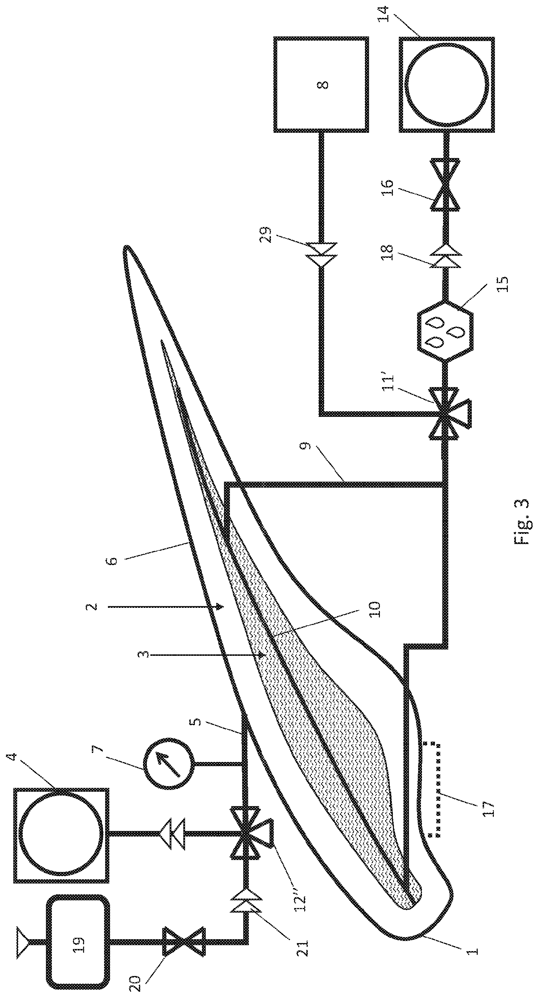

Fig. 3 shows a second embodiment of the manufacturing system, where an air drying unit 19 is connected to the second valve element 12" via another line. A pressure regulator 20 is arranged between the second valve element 12" and the air drying unit 19.

During the drying process, dry air is introduced (indicated by double arrows 21) into the stack of layers 2 from the air drying unit 19. This is preferably done in a second sub-step, while the second valve element 12" is closed off in a first sub-step. This enhances the drying process.

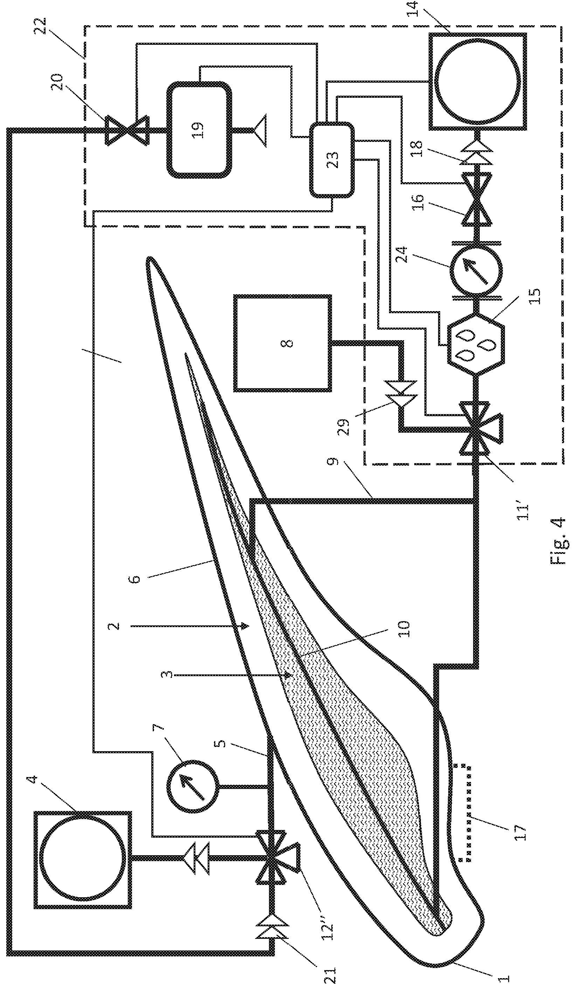

Fig. 4 shows a third embodiment of the manufacturing system, where the air drying unit 19, the second vacuum source 14 and the air moisture content sensor 15 are integrated into one compact unit 22. Optionally, the first valve element 11' and the pressure regulator 16 are also integrated into this compact unit 22.

A controller 23 is arranged in the compact unit 22 and connected to the first valve element 11', the second valve element 12", the second vacuum source 14, the pressure regulator 16 and the air drying unit 19, respectively. The controller 23 is configured to control the operation of these components and monitor at least the air moisture content in the vacuum system.

A flow meter 24 is optionally arranged between the first valve element 11' and the second vacuum source 14. The flow meter 24 is connected to the controller 23 which monitors the flow in the vacuum system.

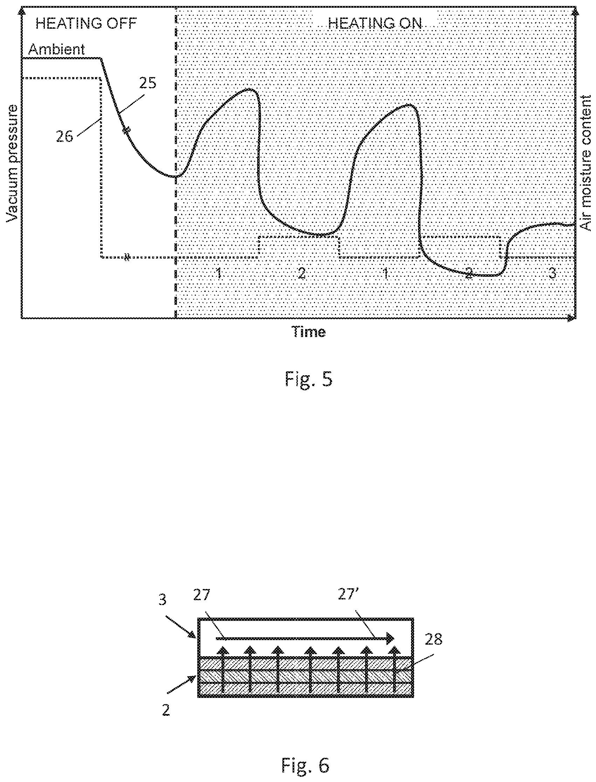

Fig. 5 shows an exemplary graph of the air moisture content and the vacuum pressure as function of time, where the air moisture content 25 is measured using the air moisture content sensor 15 and the vacuum pressure 26 is measured using a pressure sensor.

Once the second vacuum source 14 is turned on, the air moisture content 25 and the vacuum pressure 26 drop from an ambient level toward a new steady state level. In this period (indicated by HEATING OFF), the heating elements 17 are not activated yet.

Then the drying process is started and the individual heating elements 17 are activated (indicated by HEATING ON) for a pre-set time period. The vacuum pressure 26 is then alternated between a first sub-step (indicated by 1) and a second sub-step (indicated by 2). In the first sub-step, the relative air moisture content 25 increases during the first time period as no dry air is introduced into the stack of layers 2. In the second sub-step, the relative air moisture content 25 drops during the second time period as dry air is introduced into the stack of layers 2.

After the alternation between the first and second sub-steps, the relative air moisture content 25 is monitored for a third time period in a third sub-step (indicated by 3) until it reaches a steady state. If the relative air moisture content 25 is below a reference air moisture content, then the heating is terminated. If the relative air moisture content 25 is above a reference air moisture content, then the heating is continued and the first, second and second sub-steps are repeated.

Fig. 6 shows the flow of dry air 27 through the resin distribution system 3. The stacked materials are heated to a material temperature above the boiling point of water under vacuum. This causes moisture in the stack of layers 2 to evaporate (indicated by arrows 28) into the dry air 27. The moist air 27' is led away from the stack of layers via the resin distribution system 3 and the resin feed lines 9.

## Claims

1. A method of manufacturing a composite structure, such as a wind turbine blade component, comprising:
- arranging a stack of layers (2) on a moulding surface of a mould (1), wherein the stack (2) comprises at least one layer of a fibre reinforced material and at least one core element of a core material,
- further arranging a resin distribution system (3) on a top surface of the stack of layers (2),
- covering the stack of layers (2) and the resin distribution system (3) with at least one vacuum bag,
- evacuating air from the stack of layers using a vacuum source (4),
- heating the stack of layers (2) under vacuum,
- infusing the stack of layers (2) with a resin matrix material, the resin matrix material being a polyurethane material, and
- curing the infused stack of layers (2) to form the composite structure,
wherein the step of heating the stack of layers (2) under vacuum comprises:
1) applying a first vacuum pressure for a first time period,
2) applying a second vacuum pressure for a second time period, where the first vacuum pressure is lower than the second vacuum pressure,
3) alternating between sub-steps 1) and 2), and
4) monitoring an air moisture content (25) in the vacuum system for a third time period,
wherein dried air (27), e.g. cold or warm air, is introduced into the vacuum system using an air drying unit (19) during sub-step 2), while no dried air is introduced into the vacuum system during sub-step 1).

2. The method of claim 1, **characterised in that** the heating is stopped, and the stack of layers (2) is cooled, passively or actively, down to at least one infusion temperature prior to said infusing the stack of layers (2).

3. The method of claim 2, **characterised in that** cold, dried air is introduced into the vacuum system using the air drying unit (19).

4. The method of any one of claims 1 to 3, **characterised in that** the measured air moisture content (25) is compared to a reference air moisture content, where the heating is stopped if the measured air moisture content (25) crosses the reference air moisture content.

5. The method of any one of claims 1 to 4, **characterised in that** the method further comprises measuring at least one temperature relative to the stack of layers (2).

6. The method of claim 5, **characterised in that** said at least one temperature is measured at a top surface of or internally within the stack of layers (2).

7. The method of any one of claims 1 to 6, **characterised in that** the mould (1) and/or heating blankets arranged on top of the at least one vacuum bag is/are maintained at at least one reference temperature during said heating, the at least one reference temperature being dependent on a selected location on the composite structure.

8. The method of any one of claims 1 to 7, **characterised in that** said heating is performed for at least one fourth time period, the at least one fourth time period being dependent on a selected location on the composite structure.

9. The method of any one of claims 1 to 8, **characterised in that** sub-steps 1) and 2) are each repeated at least a predetermined number of times during said altering in sub-step 3).

10. A system for manufacturing a composite structure by the method of any one of claims 1 to 9, such as a wind turbine blade component, comprising:
- a mould (1) having a moulding surface adapted to receive a stack of layers (2), the stack (2) comprises at least one layer of a fibre reinforced material and at least one core element of a core material,
- a first vacuum source (4) connected to at least one vacuum line (5), which is intended to be connected to vacuum outlet channels (6) on the stack of layers (2),
- a resin injection machine (8) connected to a first valve element (11') in at least one resin feed line (9), the resin injection machine (8) being configured to supply a polyurethane resin to the stack of layers (2),
- wherein a second vacuum source (14) is further connected to the first valve element (11') and configured to perform the sub-steps 1) to 3),
- an air moisture content sensor (15) arranged in the vacuum system, e.g. between the first valve element (11') and the second vacuum source (14),
- at least one air drying unit (19) is connected to a second valve element (12") arranged at the at least one vacuum line (5), the at least one air drying unit (19) being configured to introduce dried air (27) into the stack of layers (2) in the sub-step 2) and not introduce dried air (27) into the stack of layers (2) in the sub-step 1), and
- a controller configured to control the operations of the air drying unit (19), the second vacuum source (14) and the air moisture content sensor (15).

## Patentansprüche

1. Verfahren zur Herstellung einer Verbundstruktur, wie etwa einer Windturbinenblattkomponente, umfassend:
• Anordnen eines Schichtenstapels (2) auf einer Formoberfläche einer Form (1), wobei der Stapel (2) mindestens eine Schicht aus einem faserverstärkten Material und mindestens ein Kernelement aus einem Kernmaterial umfasst,
• weiteres Anordnen eines Harzverteilungssystems (3) auf einer Oberseite des Schichtenstapels (2),
• Abdecken des Schichtenstapels (2) und des Harzverteilungssystems (3) mit mindestens einem Vakuumsack,
• Evakuieren von Luft aus dem Schichtenstapel unter Verwendung einer Vakuumquelle (4),
• Erwärmen des Schichtenstapels (2) unter Vakuum,
• Infundieren des Schichtenstapels (2) mit einem Harzmatrixmaterial, wobei das Harzmatrixmaterial ein Polyurethanmaterial ist, und
• Aushärten des infundierten Schichtenstapels (2) zur Bildung der Verbundstruktur,
wobei der Schritt des Erwärmens des Schichtenstapels (2) unter Vakuum umfasst:
1) Anlegen eines ersten Vakuumdrucks für eine erste Zeitperiode,
2) Anlegen eines zweiten Vakuumdrucks für eine zweite Zeitperiode, wobei der erste Vakuumdruck niedriger als der zweite Vakuumdruck ist,
3) Wechseln zwischen den Unterschritten 1) und 2), und
4) Überwachen eines Luftfeuchtigkeitsgehalts (25) im Vakuumsystem für eine dritte Zeitperiode,
wobei getrocknete Luft (27), z.B. kalte oder warme Luft, während des Unterschritts 2) unter Verwendung einer Lufttrocknungseinheit (19) in das Vakuumsystem eingeführt wird, während während des Unterschritts 1) keine getrocknete Luft in das Vakuumsystem eingeführt wird.

2. Verfahren nach Anspruch 1, **dadurch gekennzeichnet, dass** das Erwärmen gestoppt wird und der Schichtenstapel (2) passiv oder aktiv auf mindestens eine Infusionstemperatur vor dem Infundieren des Schichtenstapels (2) abgekühlt wird.

3. Verfahren nach Anspruch 2, **dadurch gekennzeichnet, dass** kalte, getrocknete Luft unter Verwendung der Lufttrocknungseinheit (19) in das Vakuumsystem eingeführt wird.

4. Verfahren nach einem der Ansprüche 1 bis 3, **dadurch gekennzeichnet, dass** der gemessene Luftfeuchtigkeitsgehalt (25) mit einem Referenz-Luftfeuchtigkeitsgehalt verglichen wird, wobei das Erwärmen gestoppt wird, wenn der gemessene Luftfeuchtigkeitsgehalt (25) den Referenz-Luftfeuchtigkeitsgehalt unterschreitet.

5. Verfahren nach einem der Ansprüche 1 bis 4, **dadurch gekennzeichnet, dass** das Verfahren ferner das Messen mindestens einer Temperatur relativ zum Schichtenstapel (2) umfasst.

6. Verfahren nach Anspruch 5, **dadurch gekennzeichnet, dass** die mindestens eine Temperatur an einer Oberseite des oder innerhalb des Schichtenstapels (2) gemessen wird.

7. Verfahren nach einem der Ansprüche 1 bis 6, **dadurch gekennzeichnet, dass** die Form (1) und/oder auf dem mindestens einen Vakuumsack angeordnete Heizdecken während des Erwärmens auf mindestens einer Referenztemperatur gehalten wird/werden, wobei die mindestens eine Referenztemperatur von einem ausgewählten Ort an der Verbundstruktur abhängig ist.

8. Verfahren nach einem der Ansprüche 1 bis 7, **dadurch gekennzeichnet, dass** das Erwärmen für mindestens eine vierte Zeitperiode durchgeführt wird, wobei die mindestens eine vierte Zeitperiode von einem ausgewählten Ort an der Verbundstruktur abhängig ist.

9. Verfahren nach einem der Ansprüche 1 bis 8, **dadurch gekennzeichnet, dass** die Unterschritte 1) und 2) jeweils eine vorbestimmte Anzahl von Malen während des Wechselns im Unterschritt 3) wiederholt werden.

10. System zur Herstellung einer Verbundstruktur durch das Verfahren nach einem der Ansprüche 1 bis 9, wie etwa einer Windturbinenblattkomponente, umfassend:
• eine Form (1) mit einer Formoberfläche, die zur Aufnahme eines Schichtenstapels (2) angepasst ist, wobei der Stapel (2) mindestens eine Schicht aus einem faserverstärkten Material und mindestens ein Kernelement aus einem Kernmaterial umfasst,
• eine erste Vakuumquelle (4), die mit mindestens einer Vakuumleitung (5) verbunden ist, welche dazu bestimmt ist, mit Vakuumauslasskanälen (6) am Schichtenstapel (2) verbunden zu werden,
• eine Harzinjektionsmaschine (8), die mit einem ersten Ventilelement (11') in mindestens einer Harzzuführleitung (9) verbunden ist, wobei die Harzinjektionsmaschine (8) konfiguriert ist, um ein Polyurethanharz dem Schichtenstapel (2) zuzuführen,
• wobei eine zweite Vakuumquelle (14) ferner mit dem ersten Ventilelement (11') verbunden und konfiguriert ist, um die Unterschritte 1) bis 3) durchzuführen,
• einen Luftfeuchtigkeitsgehaltssensor (15), der im Vakuumsystem angeordnet ist, z.B. zwischen dem ersten Ventilelement (11') und der zweiten Vakuumquelle (14),
• mindestens eine Lufttrocknungseinheit (19), die mit einem zweiten Ventilelement (12'') verbunden ist, das an der mindestens einen Vakuumleitung (5) angeordnet ist, wobei die mindestens eine Lufttrocknungseinheit (19) konfiguriert ist, um getrocknete Luft (27) in den Schichtenstapel (2) im Unterschritt 2) einzuführen und keine getrocknete Luft (27) in den Schichtenstapel (2) im Unterschritt 1) einzuführen, und
• einen Controller, der konfiguriert ist, um die Operationen der Lufttrocknungseinheit (19), der zweiten Vakuumquelle (14) und des Luftfeuchtigkeitsgehaltssensors (15) zu steuern.

## Revendications

1. Procédé de fabrication d'une structure composite, telle qu'un composant de pale d'éolienne, comprenant :
• la disposition d'un empilement de couches (2) sur une surface de moulage d'un moule (1), dans lequel l'empilement (2) comprend au moins une couche d'un matériau renforcé par des fibres et au moins un élément d'âme d'un matériau d'âme,
• la disposition supplémentaire d'un système de distribution de résine (3) sur une surface supérieure de l'empilement de couches (2),
• le recouvrement de l'empilement de couches (2) et du système de distribution de résine (3) avec au moins un sac à vide,
• l'évacuation de l'air de l'empilement de couches à l'aide d'une source de vide (4),
• le chauffage de l'empilement de couches (2) sous vide,
• l'infusion de l'empilement de couches (2) avec un matériau de matrice de résine, le matériau de matrice de résine étant un matériau de polyuréthane, et
• le durcissement de l'empilement de couches infusé (2) pour former la structure composite,
dans lequel l'étape de chauffage de l'empilement de couches (2) sous vide comprend :
1) l'application d'une première pression de vide pendant une première période de temps,
2) l'application d'une seconde pression de vide pendant une seconde période de temps, la première pression de vide étant inférieure à la seconde pression de vide,
3) l'alternance entre les sous-étapes 1) et 2), et
4) la surveillance d'une teneur en humidité de l'air (25) dans le système de vide pendant une troisième période de temps, dans lequel de l'air séché (27), par exemple de l'air froid ou chaud, est introduit dans le système de vide à l'aide d'une unité de séchage d'air (19) pendant la sous-étape 2), tandis qu'aucun air séché n'est introduit dans le système de vide pendant la sous-étape 1).

2. Procédé selon la revendication 1, **caractérisé en ce que** le chauffage est arrêté, et l'empilement de couches (2) est refroidi, passivement ou activement, jusqu'à au moins une température d'infusion avant ladite infusion de l'empilement de couches (2).

3. Procédé selon la revendication 2, **caractérisé en ce que** de l'air froid et séché est introduit dans le système de vide à l'aide de l'unité de séchage d'air (19).

4. Procédé selon l'une quelconque des revendications 1 à 3, **caractérisé en ce que** la teneur en humidité de l'air mesurée (25) est comparée à une teneur en humidité de l'air de référence, le chauffage étant arrêté si la teneur en humidité de l'air mesurée (25) franchit la teneur en humidité de l'air de référence.

5. Procédé selon l'une quelconque des revendications 1 à 4, **caractérisé en ce que** le procédé comprend en outre la mesure d'au moins une température relative à l'empilement de couches (2).

6. Procédé selon la revendication 5, **caractérisé en ce que** ladite au moins une température est mesurée à une surface supérieure de ou à l'intérieur de l'empilement de couches (2).

7. Procédé selon l'une quelconque des revendications 1 à 6, **caractérisé en ce que** le moule (1) et/ou des couvertures chauffantes disposées au-dessus du ou des au moins un sac à vide est/sont maintenus à au moins une température de référence pendant ledit chauffage, la ou les au moins une température de référence étant dépendante d'un emplacement sélectionné sur la structure composite.

8. Procédé selon l'une quelconque des revendications 1 à 7, **caractérisé en ce que** ledit chauffage est effectué pendant au moins une quatrième période de temps, la ou les au moins une quatrième période de temps étant dépendante d'un emplacement sélectionné sur la structure composite.

9. Procédé selon l'une quelconque des revendications 1 à 8, **caractérisé en ce que** les sous-étapes 1) et 2) sont chacune répétées un nombre de fois prédéterminé pendant ladite alternance de la sous-étape 3).

10. Système de fabrication d'une structure composite par le procédé selon l'une quelconque des revendications 1 à 9, tel qu'un composant de pale d'éolienne, comprenant :
• un moule (1) ayant une surface de moulage adaptée pour recevoir un empilement de couches (2), l'empilement (2) comprenant au moins une couche d'un matériau renforcé par des fibres et au moins un élément d'âme d'un matériau d'âme,
• une première source de vide (4) connectée à au moins une ligne de vide (5), qui est destinée à être connectée à des canaux de sortie de vide (6) sur l'empilement de couches (2),
• une machine d'injection de résine (8) connectée à un premier élément de vanne (11') dans au moins une ligne d'alimentation en résine (9), la machine d'injection de résine (8) étant configurée pour fournir une résine de polyuréthane à l'empilement de couches (2),
• dans lequel une seconde source de vide (14) est en outre connectée au premier élément de vanne (11') et configurée pour effectuer les sous-étapes 1) à 3),
• un capteur de teneur en humidité de l'air (15) disposé dans le système de vide, par exemple entre le premier élément de vanne (11') et la seconde source de vide (14),
• au moins une unité de séchage d'air (19) connectée à un second élément de vanne (12'') disposé à la ou les au moins une ligne de vide (5), la ou les au moins une unité de séchage d'air (19) étant configurée pour introduire de l'air séché (27) dans l'empilement de couches (2) lors de la sous-étape 2) et ne pas introduire d'air séché (27) dans l'empilement de couches (2) lors de la sous-étape 1), et
• un contrôleur configuré pour commander les opérations de l'unité de séchage d'air (19), de la seconde source de vide (14) et du capteur de teneur en humidité de l'air (15).
